# EUROPEAN PATENT APPLICATION

(11) **EP 2 733 936 A1**
(43) Date of publication of application: **21.05.2014**
(21) Application number: 12811869.2
(22) Date of filing: 11.07.2012
(51) Int. Cl.: H04N 7/173

(54) **TRANSMISSION DEVICE, METHOD FOR CONTROLLING TRANSMISSION DEVICE, CONTROL PROGRAM, AND RECORDING MEDIUM**

(30) Priority: 12.07.2011 JP 2011154350; 24.04.2012 JP 2012099296
(71) Applicant: Sharp Kabushiki Kaisha, Osaka-shi, Osaka 545-8522 (JP)
(72) Inventor: TAKAHASHI, Maki, Osaka-shi, Osaka 545-8522 (JP); WATANABE, Shuhichi, Osaka-shi, Osaka 545-8522 (JP); TOKUMO, Yasuaki, Osaka-shi, Osaka 545-8522 (JP); OGISAWA, Yoshiaki, Osaka-shi, Osaka 545-8522 (JP)
(74) Representative: Müller - Hoffmann & Partner
(86) International application number: PCT/JP2012/067755
(87) International publication number: WO 2013/008867

(57) **Abstract**

A server (2) includes an index information generator (24) and an encoder (23). When a plurality of items of segment data (27) have been encoded up to predetermined sub segment data, the index information generator (24) generates index information (28) used for switching content, which serves as a playback subject, at this sub segment data. The encoder (23) causes a client (1) to obtain the index information (28) generated by the index information generator (24).

## Description

### Technical Field

The present invention relates to a technology in which, in a system in which content is transmitted from a server to a client, the server performs multiple encoding by using different encoding parameters, and when receiving and playing back the content, the client selects a suitable playback subject from among the encoding parameters in accordance with the condition of, for example, communication environments, and switches the playback subject appropriately while playing back the content in accordance with a change in the communication environments.

### Background Art

A technology for providing content via a communication network has been widely used. For example, Patent Literature 1, which is indicated below, discloses a content streaming service system in which a client requests a server to send content using a HTTP and the client performs a stream playback on the content received in response to this request.

One of such systems is DASH (Dynamic Adaptive Streaming over HTTP) disclosed in Non Patent Literature 1 for which standardization is currently in progress in MPEG (Moving Picture Experts Group). In DASH, description information (meta data), which is called MPD data (Media Presentation Description), is used for streaming control. The MPD data describes attributes of content, the playback order of resources forming the content, and so on. A client receives MPD data before or during the provision of a streaming service, refers to the MPD data, and determines a resource which the client will request a server to send.

In this MPD data, the playback duration of subject content is divided into a plurality of playback duration periods, and information concerning each divided playback duration period is described as a period (Period). In each period, representation (Representation) indicating information concerning a resource to be played back is also described. In one period, multiple representations may be described. That is, the client selects one of multiple representations in one playback duration period as a playback subject.

Accordingly, by describing multiple representations with different bit rates in the MPD data, the client may select a representation with a bit rate which matches, for example, a communication condition or the playback performance of a device of the client, obtain a resource specified by the selected representation, and play back the resource.

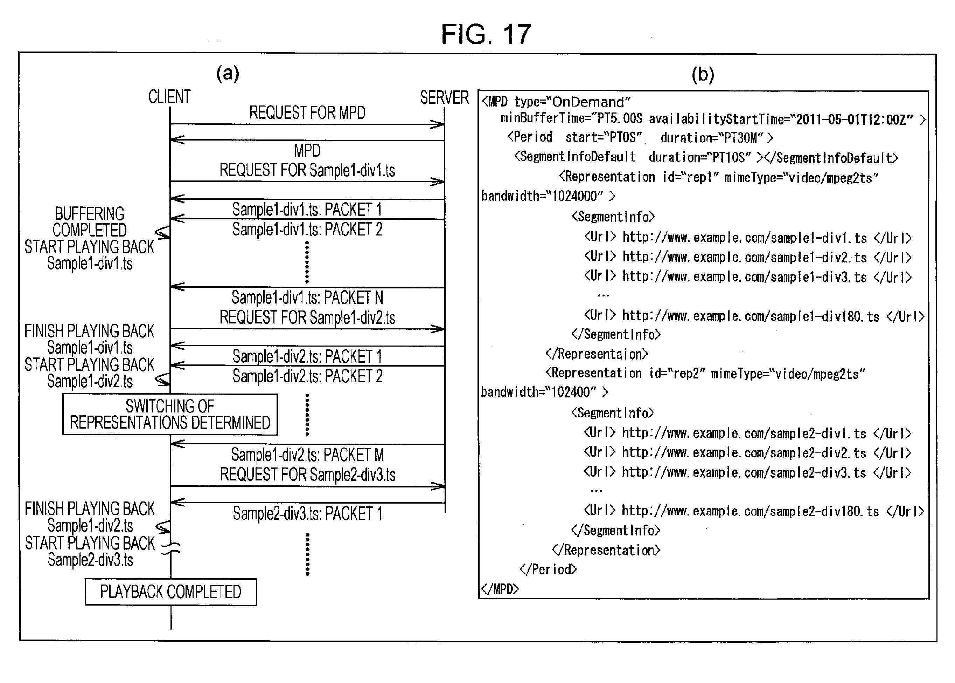

Details of a stream playback operation using DASH will be described below through illustration of an example shown in Fig. 17. Fig. 17 illustrates an example in which representations are dynamically switched during stream playback using DASH. Part (a) of Fig. 17 is a timing chart illustrating an example of processing between a server and a client. Part (b) of Fig. 17 illustrates an example of MPD data used by the client.

Details of MPD data will first be discussed with reference to part (b) of Fig. 17. MPD data is meta data described in XML. In MPD data, an MPD element which describes information concerning the entire stream distribution is used as a root element, and as attributes of the MPD element, a stream distribution type (type), a minimum buffer time necessary for starting stream playback (minBufferTime), and a start time of stream distribution (availabilityStartTime) are described. The MPD element further includes a Period element (one in the example shown in part (b) of Fig. 17) indicating the above-described period as a sub element.

The period includes Representation elements (two in the example shown in part (b) of Fig. 17) indicating the above-described representation. Multiple representations included in one period are alternatives that may be played back during this period. In other words, one of multiple representations included in the same period can be selected and played back.

Each representation has attributes of a playback subject corresponding to this representation. As attributes of a representation, information concerning encoding conditions for a playback subject (in particular, information concerning playback of content), such as a codec, bit rate, frame rate, and resolution, may be described. A client refers to these attributes and selects a representation.

For example, if, for a certain piece of video content, multiple representations with different codecs, bit rates, frame rates, and resolutions are described, a client selects a representation with a codec, bit rate, frame rate, and resolution which match the playback performance of a device of the client.

In the example shown in part (b) of Fig. 17, as the attributes of a representation, an identifier (id) of this representation, a MIME type indicating a data format (mimeType), and a bit rate (in part (b) of Fig. 17, a network bandwidth necessary for performing stream playback on the representation: bandwidth) are described.

In the period, information concerning segment data is described by using a SegmentInfoDefault element and a SegmentInfo element. Segment data is an access unit which is used for a resource forming content to be played back and which is specified by one URL (Uniform Resource Locator). In the example shown in part (b) of Fig. 17, in the SegmentInfoDefault element, default values of parameters applied to all items of segment data included in this period are described, and the playback duration (duration) of each item of segment data is described. Additionally, for each of the above-described representations, a SegmentInfo element is described. In a Url element, which is a sub element of the SegmentInfo element, a URL of each item of segment data is described. A client may obtain segment data forming a selected representation by accessing an associated URL.

In the example shown in part (b) of Fig. 17, a plurality of URLs are described for each representation. By the application of the playback duration described in the above-described SegmentInfoDefault, the playback duration of segment data to be obtained by accessing each URL is ten seconds. That is, the first URL described in the SegmentInfo element corresponds to segment data which is played back for ten seconds (from 0 to 10 seconds) immediately after the start of stream playback, the second URL described in the SegmentInfo element corresponds to segment data which is played back for ten seconds from 10 to 20 seconds, and the third URL described in the SegmentInfo element corresponds to segment data which is played back for ten seconds from 20 to 30 seconds.

As shown in part (b) of Fig. 17, different values are indicated as the attributes of the individual representations. More specifically, for the first representation, "video/mpeg2ts" indicating MPEG2-TS (ISO/IEC 13818) is indicated as the MIME type, and "1024000" is indicated as the bandwidth. In contrast, for the second representation, although "video/mpeg2ts", which is the same type as that of the first representation, is indicated as the MIME type, "102400" is described as the bandwidth.

Accordingly, when using this MPD data, the client may select one of a representation with MPEG2-TS having a bandwidth "1024000" and a representation with MPEG2-TS having a bandwidth "102400". Since the content of these representations is the same video content, the client may select the first representation if a sufficient bandwidth is available and the client wishes to obtain high quality video, and may select the second representation if a sufficient bandwidth is not available. Note that, in the example shown in part (b) of Fig. 17, a case in which MPEG2-TS is used as segment data is shown, but, in DASH, MP4 may be used as segment data.

Part (a) of Fig. 17 is a flow of processing for playing back the content by using this MPD data. As shown in part (a) of Fig. 17, a client first requests a server to send MPD data, and the server sends MPD data to the client in response to this request.

Then, upon obtaining this MPD data, the client selects one of representations described in the MPD data, and requests the server to send segment data by using a URL included in the selected representation. In this example, the client selects the first representation and requests the server to send "Sample-div1.ts" by using the first URL. As described in the MPD data, the client makes a request to send the segment data in accordance with the start time of stream distribution (availabilityStartTime). That is, in the example shown in Fig. 17, a request to send "Sample-div1.ts" is made at 12:00 on May 1, 2011.

Upon receiving this request, the server sends the requested segment data to the client. The segment data is divided into a plurality of IP packets, and the IP packets are sequentially sent to the client. The time required to finish sending the segment data from the start time varies in accordance with, for example, the traffic of a network which connects the client and the server.

The client starts receiving the segment data, and upon receiving the segment data after the lapse of the minimum buffer time necessary for starting stream playback (minBufferTime) described in the MPD data, that is, six seconds in the example shown in Fig. 17, the client starts playing back the segment data.

Upon the completion of receiving "Sample-div1.ts", the client makes a request to send "Sample-div2.ts", which is the subsequent data. In response to this request, the server sends data "Sample-div2.ts" to the client. The client then plays back this received segment data after finishing playing back "Sample-div1.ts".

It is now assumed that the throughput between the client and the server has decreased due to, for example, an increase in the traffic, and the reception of the segment data has been delayed. If such a delay continues for a long time, the playback of data is frequently interrupted due to the necessity of buffering, thereby making it difficult for the client to view or listen to the content. Accordingly, the client judges that the switching of the segment data is necessary. In the MPD data shown in part (b) of Fig. 17, segment data which requires a narrower bandwidth is included in the second representation. Thus, the client decides to switch the playback subject to the second representation.

The client has already made a request to send "Sample1-div1.ts" and "Sample1-div2.ts" corresponding to the playback duration from 0 to 20 seconds. Accordingly, after finishing receiving "Sample1-div2.ts", the client obtains "Sample2-div3.ts" corresponding to a segment of the playback duration from 20 to 30 seconds of the second representation, and plays back "Sample2-div3.ts" after finishing playing back "Sample1-div2.ts". Thereafter, the client sequentially receives and plays back items of segment data forming the second representation.

In this manner, in DASH, adaptive streaming may be performed in which representations are switched dynamically in units of items of segment data in accordance with the network condition.

However, in order to implement the above-described adaptive streaming, representations are required to be switched in a short period of time so as to cope with a momentary change in the network traffic. In other words, it is necessary that the playback duration of segment data, which is a basis for switching representations, be sufficiently short (for example, two seconds).

If the playback duration of segment data is set to be short, the amount of MPD data is increased, and the network traffic is increased due to the sending of requests to obtain segments when playing back content.

In order to solve these problems, the following alternative method has been proposed: instead of setting the playback duration of each item of segment data, segment data is divided into a plurality of items of sub segment data and index information for referring to each item of sub segment data is described. In this method, sub segment data is not an item of data obtained by dividing segment data physically, but is an item of data which enables part of segment data to be referred to as sub segment data by using index information. That is, index information may be considered as control information which indicates positions at which segment data is logically divided.

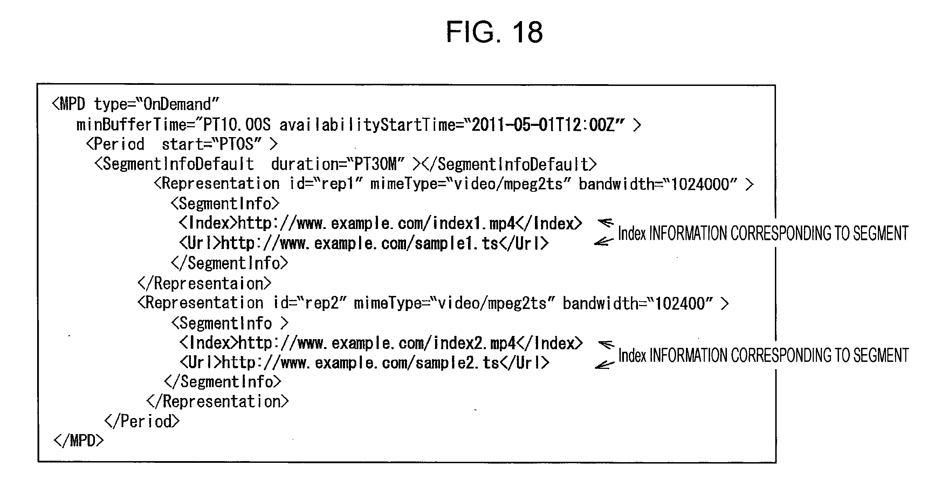

This will be explained below with reference to Figs. 18 through 20. Fig. 18 illustrates an example of MPD data which implements streaming illustrated in Fig. 17 by using index information. As in the MPD data shown in part (b) of Fig. 17, the MPD data shown in Fig. 18 includes two representations, but each representation includes only one item of segment data. Segment data "sample1.ts" is data obtained by connecting the items of segment data "sample1.div1.ts" through "sample1.div180.ts" shown in Fig. 17, and segment data "sample2.ts" is data obtained by connecting the items of segment data "sample2.div1.ts" through "sample2.div180.ts" shown in Fig. 17. The duration attribute in the SegmentInfoDefault element shows that the playback duration is set to be thirty minutes. An Index element for referring to index information concerning each item of segment data is described such that it forms a pair with the SegmentInfo element. In the Index element, a URL for accessing index information is described.

By accessing the URL described in the Index element, it is possible to obtain the index information for specifying sub segments which are obtained by dividing segment data logically.

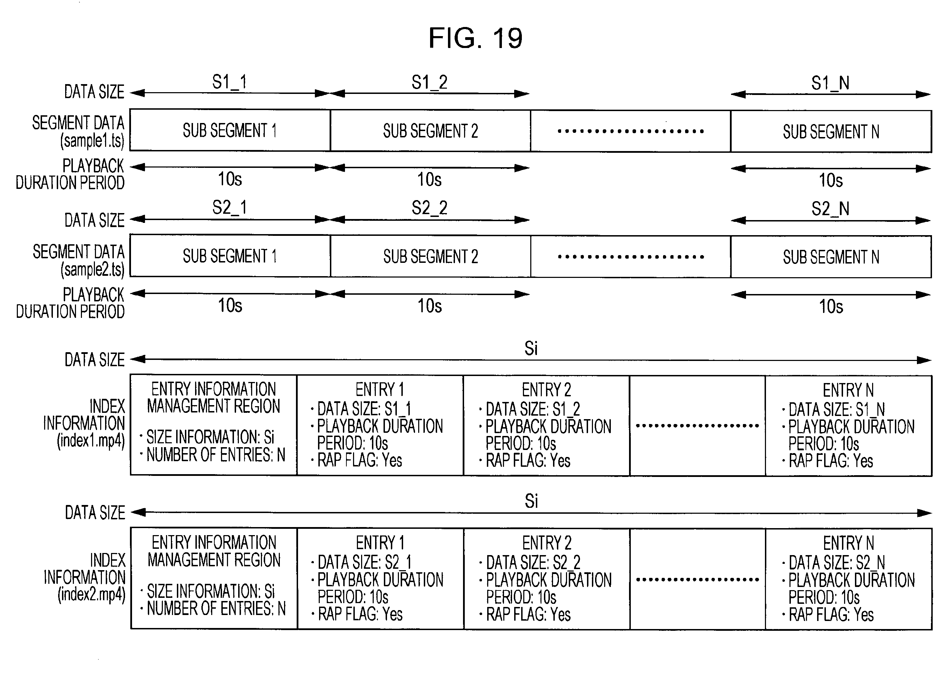

Fig. 19 illustrates details of segment data "sample1.ts" and index information "index1.mp4" which form a pair illustrated in Fig. 18, and segment data "sample2.ts" and index information "index2.mp4" which form a pair illustrated in Fig. 18. As shown in Fig. 19, the segment data is constituted by sub segments 1 through N. The sub segments 1 through N of the segment data "sample1.ts" respectively correspond to the items of segment data "sample1.div1.ts" through "sample1.div180.ts" shown in Fig. 17, and the sub segments 1 through N of the segment data "sample2.ts" respectively correspond to the items of segment data "sample2.div1.ts" through "sample2.div180.ts" shown in Fig. 17.

The data sizes of the sub segments 1, 2, ..., and N of the segment data "sample1.ts" are S1_1, S1_2, and ..., S1_N, respectively, and the data sizes of the sub segments 1, 2, ..., and N of the segment data "sample2.ts" are S2_1, S2_2, and ..., S2_N, respectively. The playback duration period of each sub segment is ten seconds.

In the index information "index1.mp4" and "index2.mp4", for each sub segment of the associated segment data "Sample1.ts" and "Sample2.ts", the data size, the playback duration period, and an RAP flag indicating whether or not the head of the associated sub segment is a random access point are recorded as entry information (entries 1 through N in Fig. 19).

In DASH, the data format of index information is MP4 regardless of which data format is used for segment data, and an entry information management region which manages the above-described entry information is provided at the head of index information.

In the entry information management region, the data size Si of the entire index information and the number of entries N included in this index information (the number of sub segments included in the associated segment data) are recorded.

Accordingly, by obtaining the index information "index1.mp4" and "index2.mp4", a client is able to identify that the playback duration periods of the sub segments 1 through N within the associated segment data are 0 to 10 seconds, 10 to 20 seconds, ..., 1790 to 1800 seconds, respectively, and to determine the byte offsets of the sub segments 1 through N within the segment data.

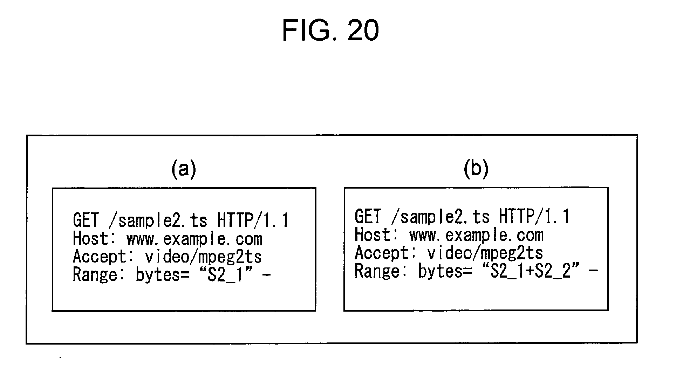

Thus, through an HTTP request, such as that shown in part (a) of Fig. 20, sub segments starting from the sub segment 2 of the segment data "sample2.ts", or through an HTTP request which specifies the byte range (byte position), such as that shown in part (b) of Fig. 20, sub segments starting from the sub segment 3 can be obtained, thereby implementing the switching of representations in units of sub segments.

In the related art in which the switching of representations (adaptive streaming) in units of sub segments is implemented by using the above-described index information, the following advantages are obtained: (1) in comparison with the related art in which the switching of representations (adaptive streaming) in units of segments is implemented by using MPD data, the description of MPD data is simplified; (2) a request to obtain index information and segment data (or a sub segment) is generated only when the switching of representations is performed, thereby making it possible to decrease the communication traffic, which would otherwise be increased by HTTP requests generated during streaming; and (3) if the switching of representations is not performed, it is not necessary to obtain index information.

### Citation List

### Patent Literature

PTL 1: Japanese Unexamined Patent Application Publication No. 2005-110244 (Publication Date: April 21, 2005)

### Non Patent Literature

NPL 1: "Information technology-MPEG systems technologies - Part 6: Dynamic Adaptive streaming over HTTP (DASH)", [online], January 28, 2011, [Searched on June 3, 2011], ISO/IEC, the Internet <http://www.itscj.ipsj.or.jp/sc29/open/29view/29n11873t.doc>

### Summary of Invention

### Technical Problem

On the other hand, however, in the above-described related art, there is a problem in that, with the application of the above-described related art to live streaming, the distribution with very little delay is not feasible.

This will be discussed more specifically. In order to perform the switching of representations in units of sub segments by using index information, index information concerning segment data which is being live-distributed is necessary. As stated above, however, in the index information, the data size of the entire index information, the number of sub segments included in an associated item of segment data, the data size of each item of sub segment, and so on, are included. Accordingly, it is not possible to generate index information until the encoding of segment data has been completed.

Thus, it is necessary to delay the start of distribution of segment data and index information until the live encoding of the segment data has started and finished and until the generation of the index information for the segment data has been completed. It takes very little to generate index information. However, it takes the same amount of time to complete live encoding of segment data as that to play back the segment data. Thus, it can be said that it is necessary to delay the start of distribution of segment data for the same amount of time as the playback duration for this segment data.

The present invention has been made in view of the above-described problem. Accordingly, it is an object of the present invention to provide a transmitting apparatus, and so on, in which, in a system which performs live streaming with very little delay, it is possible to start distributing segment data and index data without having to wait until live encoding of one item of segment data has been completed, thereby implementing the switching of representations (adaptive streaming).

### Solution to Problem

In order to solve the above-described problem, a transmitting apparatus of the present invention is a transmitting apparatus which encodes a plurality of pieces of content corresponding to the same playback duration and which transmits a piece of content which is selected as a playback subject among the encoded pieces of content to a playback apparatus. The transmitting apparatus includes: reference information generating means for generating, at a time point at which the plurality of pieces of content have been encoded up to a predetermined playback position, reference information for switching the content, which serves as a playback subject, at a partial playback duration period up to the predetermined playback position within the playback duration; and reference information providing means for causing the playback apparatus to obtain the reference information generated by the reference information generating means.

Moreover, in order to solve the above-described problem, a control method for a transmitting apparatus of the present invention is a control method for a transmitting apparatus which encodes a plurality of pieces of content corresponding to the same playback duration and which transmits a piece of content which is selected as a playback subject among the encoded pieces of content to a playback apparatus. The control method includes: a reference information generating step of generating, at a time point at which the plurality of pieces of content have been encoded up to a predetermined playback position, reference information for switching the content, which serves as a playback subject, at a partial playback duration period up to the predetermined playback position within the playback duration; and a reference information providing step of causing the playback apparatus to obtain the reference information generated in the reference information generating step.

With the above-described configuration, at a time point at which the plurality of pieces of content have been encoded up to a partial playback duration period, reference information for switching the content, which serves as a playback subject, at this partial playback duration period is generated, and the playback apparatus is allowed to obtain this reference information.

Accordingly, before the encoding of content has been completed, the playback apparatus is able to switch content, which serves as a playback subject, at a partial playback duration period. That is, with the above-described configuration, before the encoding of content has been completed, the playback apparatus is allowed to switch content, which serves as a playback subject, at some midpoint of the single playback duration.

The content which is being played back by the playback apparatus is a portion which has been encoded, and such a portion can be switched by using reference information. Accordingly, with the above-described configuration, the switching of content can be reliably performed at a playback position at which the playback apparatus is playing back.

The transmitting apparatus and the playback apparatus may be implemented by a computer, in which case, a computer is operated as the individual means of the transmitting apparatus and the playback apparatus. Thus, a control program for implementing the transmitting apparatus and the playback apparatus by using a computer and a computer-readable recording medium on which the control program is recorded are also encompassed within the present invention.

### Advantageous Effects of Invention

As described above, the transmitting apparatus of the present invention includes: reference information generating means for generating, at a time point at which a plurality of pieces of content have been encoded up to a predetermined playback position, reference information for switching the content, which serves as a playback subject, at a partial playback duration period up to the predetermined playback position within the playback duration; and reference information providing means for causing the playback apparatus to obtain the reference information generated by the reference information generating means.

Moreover, the control method for a transmitting apparatus of the present invention includes: a reference information generating step of generating, at a time point at which a plurality of pieces of content have been encoded up to a predetermined playback position, reference information for switching the content, which serves as a playback subject, at a partial playback duration period up to the predetermined playback position within the playback duration; and a reference information providing step of causing the playback apparatus to obtain the reference information generated in the reference information generating step.

Accordingly, before the encoding of content has been completed, the playback apparatus is able to switch content, which serves as a playback subject, at a partial playback duration period. That is, with the above-described configuration, before the encoding of content has been completed, the playback apparatus is allowed to switch content, which serves as a playback subject, at some midpoint of the single playback duration.

### Brief Description of Drawings

[Fig. 1] Fig. 1 is a block diagram illustrating the configuration of major parts of a client and a server included in a content transmitting-and-receiving system according to an embodiment of the present invention.
[Fig. 2] Fig. 2 illustrates an example of MPD data used in the content transmitting-and-receiving system.
[Fig. 3] Fig. 3 illustrates the relationship between index information and segment data.
[Fig. 4] Fig. 4 is a flowchart illustrating an operation performed by an index information generator in the server.
[Fig. 5] Fig. 5 is a timing chart illustrating a timing at which MPD data is generated and a timing at which the generated MPD data can be distributed by the server.
[Fig. 6] Fig. 6 is a timing chart illustrating a timing at which segment data is generated and a timing at which the generated segment data can be distributed by the server.
[Fig. 7] Fig. 7 is a timing chart illustrating a timing at which sub segment data is generated and a timing at which the generated sub segment data can be distributed by the server.
[Fig. 8] Fig. 8 is a timing chart illustrating a timing at which index information data is generated and a timing at which the generated index information data can be distributed by the server.
[Fig. 9] Fig. 9 is a timing chart illustrating a timing at which each item of entry information of index information data is generated and a timing at which each item of entry information can be distributed by the server.
[Fig. 10] Fig. 10 is a timing chart of a client which illustrates an example of adaptive streaming playback.
[Fig. 11] Fig. 11 illustrates a structure of index information constituted by normal index information and hierarchy index information.
[Fig. 12] Fig. 12 illustrates an example in which normal index information and hierarchy index information are separated into individual data structures.
[Fig. 13] Fig. 13 illustrates an example of a description of MPD data which makes it possible to independently refer to normal index information and hierarchy index information.
[Fig. 14] Fig. 14 illustrates an example of index information having a data structure in which an entry of normal index information and an entry of hierarchy index information are registered together.
[Fig. 15] Fig. 15 illustrates an example of index information in which information indicating whether or not an entry is valid is described in each entry of index information.
[Fig. 16] Fig. 16 illustrates an example of index information in which information indicating valid entries is described in a management region.
[Fig. 17] Fig. 17 illustrates an example of adaptive streaming playback: part (a) of Fig. 17 is a timing chart illustrating an example of processing between a server and a client; and part (b) of Fig. 17 illustrates an example of MPD data used for controlling the adaptive streaming.
[Fig. 18] Fig. 18 illustrates an example of MPD data which enables the use of index information.
[Fig. 19] Fig. 19 illustrates the relationship between index information and segment data.
[Fig. 20] Fig. 20 illustrates examples of HTTP requests for obtaining part of segment data in units of sub segments by using index information.
[Fig. 21] Fig. 21 illustrates an example of MPD data including a flag for distinguishing distribution methods from each other.
[Fig. 22] Fig. 22 illustrates another example of MPD data including a flag for distinguishing distribution methods from each other.

### Description of Embodiments

### [First Embodiment]

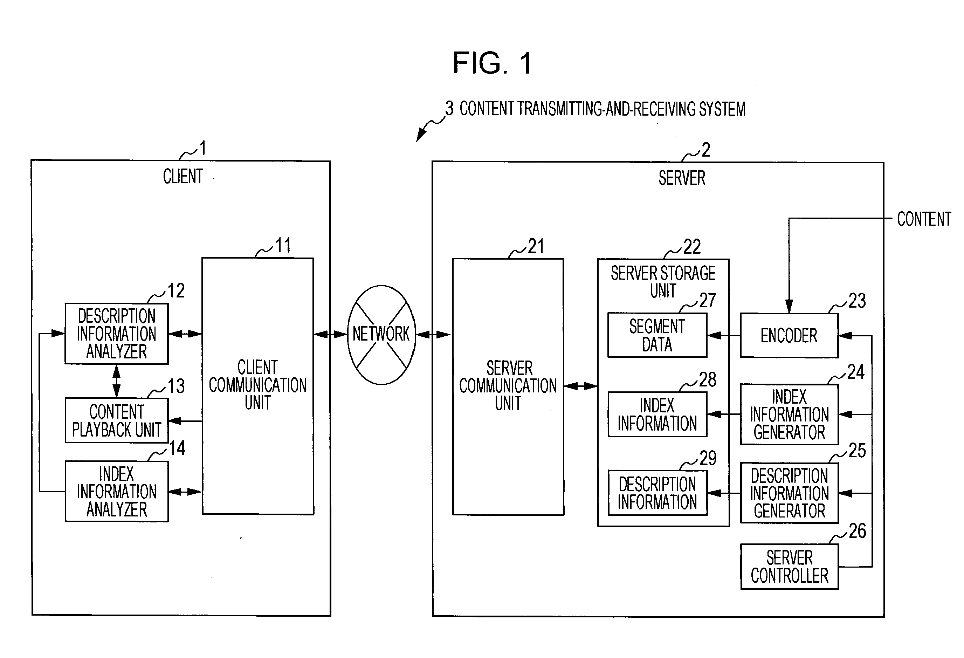

An embodiment of the present invention will be described below in detail with reference to Figs. 1 through 10.

### [Overview of System]

An overview of a content transmitting-and-receiving system of this embodiment will first be discussed with reference to Fig. 1. Fig. 1 is a block diagram illustrating the configuration of major parts of a client (playback apparatus) 1 and a server (transmitting apparatus) 2 included in a content transmitting-and-receiving system 3 according to an embodiment of the present invention.

### [Configuration of Client]

As shown in Fig. 1, the client 1 includes a client communication unit 11 which allows the client 1 to communicate with an external apparatus via a network, a description information analyzer 12, a content playback unit 13, and an index information analyzer 14.

The client communication unit 11 sends a request to send segment data or a sub segment which forms a representation selected by the description information analyzer 12 to the server 2, and obtains segment data or a sub segment. The client communication unit 11 also obtains index information requested by the index information analyzer 14. It is assumed that the client communication unit 11 sends a request by using an HTTP.

The description information analyzer 12 obtains content description information which includes, in each playback duration period (period) of the content, information indicating resources that can be requested to the server 2, and selects a representation as a playback subject in accordance with the obtained description information. More specifically, the description information analyzer 12 receives MPD data from the server 2 as description information and determines a representation as a playback subject. Additionally, upon detecting the occurrence of a predetermined event which requires the switching of representations while the content playback unit 13 is playing back segment data of a certain representation, the description information analyzer 12 decides to switch the playback subject to another representation in accordance with the detected event.

The content playback unit 13 sequentially plays back items of segment data or sub segments received through a request from the client communication unit 11. The content which has been played back may be output from a display or a speaker provided in the client 1 or may be output from a display or a speaker which is connected to the client 1 through a wired medium or a wireless medium.

The index information analyzer 14 analyzes index information received by the client communication unit 11 and notifies the description information analyzer 12 of analysis results.

### [Configuration of Server]

The server 2 includes a server communication unit (reference information providing means and description information providing means) 21, a server storage unit 22, an encoder 23, an index information generator (reference information generating means) 24, a description information generator (description information generating means) 25, and a server controller 26.

In the server storage unit 22, segment data 27, index information 28, and description information 29 which are generated and distributed by the server 2 are stored.

The server communication unit 21 sends the description information 29 to the client 1 in response to a request to send description information from the client 1. More specifically, the server communication unit 21 reads the description information 29 stored in the server storage unit 22 and sends it to the client 1. In this case, MPD data is used as the description information 29, as stated above.

Similarly, in response to a request to send the segment data 27 or a request to send the index information 28 from the client 1, the server communication unit 21 reads the segment data 27 or the index information 28 stored in the server storage unit 22 and sends the segment data 27 or the index information 28 to the client 1.

The server controller 26 supplies information, such as a timing at which data to be generated and distributed will be generated in the server 2 and distribution parameters, necessary for generating data, to the encoder 23, the index information generator 24, and the description information generator 25.

The encoder 23 encodes content which is obtained by capturing an image, for example, with a camera (not shown), and which is live-input from an external source, in accordance with encoding conditions (encoding parameters) specified for each representation by the server controller 26 so as to generate segment data 27. The encoder 23 stores the generated segment data 27 in the server storage unit 22. Multiple representations in the same period are live-encoded at the same time in parallel, and then, one item of segment data 27 is generated for each representation.

The index information generator 24 generates, for each item of segment data 27, index information 28 used for performing the switching of representations in units of sub segments included in this item of segment data 27. Details of the index information 28 and a generation method for the index information 28 will be discussed later.

As stated above, the segment data 27 is data obtained by encoding content that can be provided to the client 1 in accordance with predetermined encoding conditions and by dividing the content at intervals of predetermined playback duration periods.

The index information 28 is information for implementing the switching of representations in units of items of sub segment data. The client 1 specifies the positions of items of sub segment data by referring to the index information 28, so that it can switch the playback subject in units of items of sub segment data.

The description information 29 is information concerning content that can be provided from the server 2 to the client 1 (in this case, concerning the segment data 27 stored in the server storage unit 22). More specifically, the description information 29 is MPD data in which representations indicating selection candidates are described in each period. Details of MPD data will be discussed later.

Note that at least one of the segment data 27, the index information 28, and the description information 29 may be recorded on an external recording medium which is attachable to and detachable from the server 2, or may be recorded on an external device that can be accessed from the server 2. That is, the segment data 27, the index information 28, and the description information 29 may be stored in any location as long as it is stored in a state in which the server 2 is able to obtain.

The content transmitting-and-receiving system may be constituted by a plurality of servers 2, and the segment data 27, the index information 28, and the description information 29 may be provided from the different servers 2.

### [Details of Data Used in System]

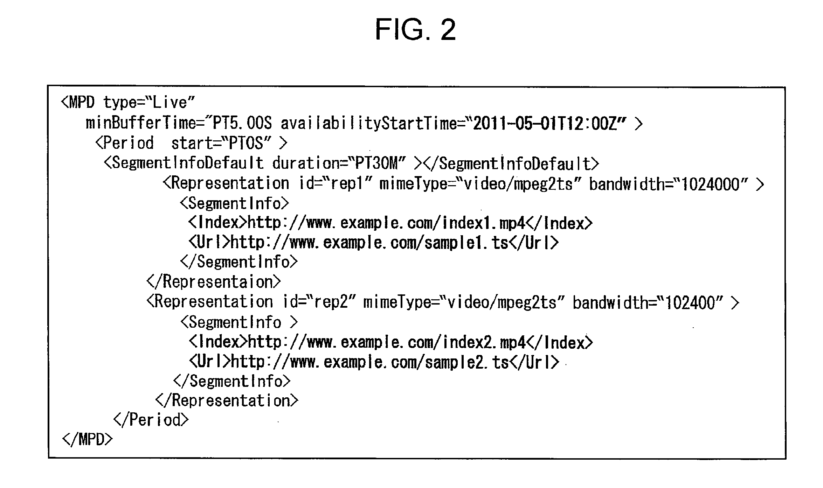

Fig. 2 illustrates an example of MPD data used in the content transmitting-and-receiving system 3. The MPD data shown in Fig. 2 is the same as that shown in Fig. 18, except that the Type attribute of the MPD element which indicates a stream distribution type is live streaming. Thus, a detailed explanation of the MPD data shown in Fig. 2 will be omitted.

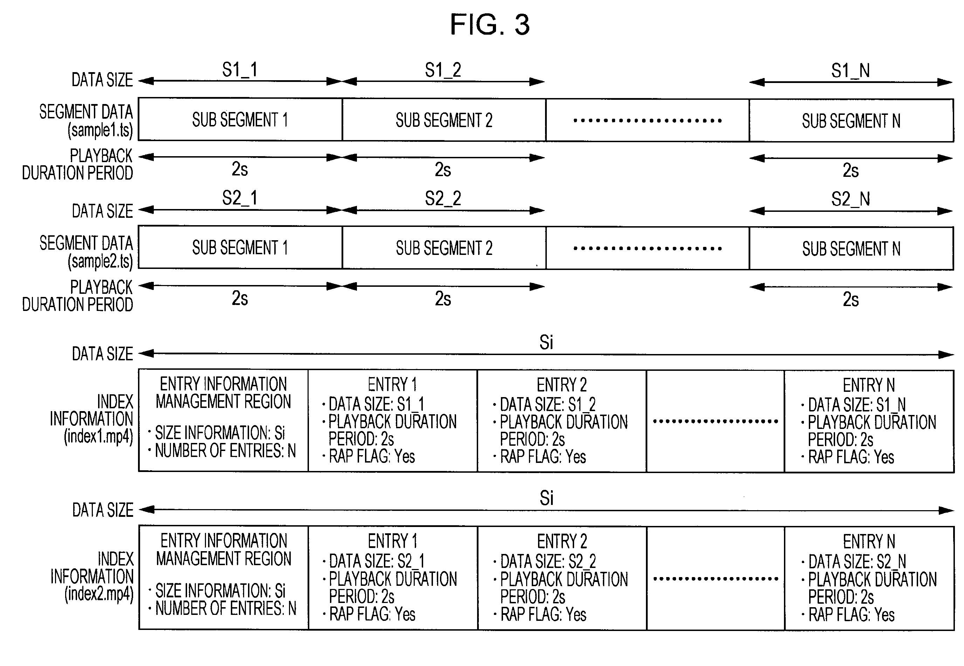

Fig. 3 illustrates examples of segment data and index information which are used in the content transmitting-and-receiving system 3, together with the MPD data shown in Fig. 2. The segment data and index information shown in Fig. 3 are the same as those shown in Fig. 19, except that, in order to implement adaptive streaming in live streaming, the playback duration period of sub segments is set to be two seconds, which is shorter than that in the examples shown in Fig. 19. Thus, a detailed explanation of the segment data and index information shown in Fig. 3 will be omitted.

### [Details of Processing Performed by Server 2]

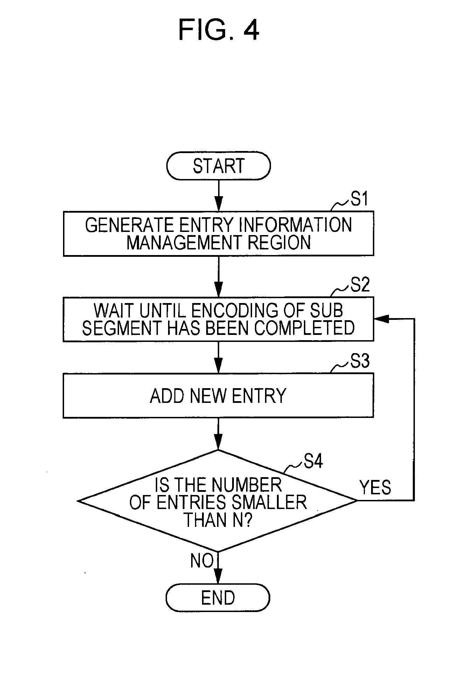

An operation performed by the server 2 in the content transmitting-and-receiving system 3 will be described below in detail with reference to Figs. 4 through 9.

Fig. 4 is a flowchart illustrating an operation performed by the index information generator 24 which generates index information for implementing adaptive streaming in the content transmitting-and-receiving system 3.

Upon starting of live streaming in the content transmitting-and-receiving system 3, the index information generator 24 generates an entry information management region in index information (S1). As stated above, it is necessary to describe the data size Si of the entire index information and the number of entries (the number of sub segments) N in the entry information management region. The data size of the entry information management region and the data size of each entry are fixed lengths. Accordingly, if the number of sub segments included in segment data is determined, the index information generator 24 is able to generate an entry information management region.

For example, when live distribution using the MPD data shown in Fig. 2 is performed, at the start point of live streaming, by inputting the playback duration of segment data, which is thirty minutes, and the playback duration period of sub segments, which is two seconds, as distribution parameters, from the server controller 26, the number of sub segments is determined to be 1800. Accordingly, an entry information management region is generated immediately.

Then, in order to generate an entry, the index information generator 24 waits until encoding of a sub segment in the encoder 23 has been completed (S2).

Upon receiving information that encoding of a sub segment in the encoder 23 has been completed from the encoder 23, the index information generator 24 generates a new entry for the associated sub element (reference information generating step), and adds the generated entry to the index information (S3). In the entry, the data size, the playback duration period, and the RAP flag of the sub segment are described. As the data size of the sub segment, a value supplied from the encoder 23 when receiving information indicating the completion of encoding of the sub segment is set. As the playback duration period of the sub segment, the duration of two seconds, which is input from the server controller 26 as a distribution parameter, is set. In this system, since the sub segment is a switching point of representations for implementing adaptive streaming, it is always encoded as a random access point, and thus, the RAP flag is always set to be Yes.

If the number of generated entries is smaller than the number of entries N determined in S1 (if the result of S4 is Yes), the process returns to step S2 and the processing is continuously performed. If the number of generated entries reaches N (if the result of S4 is No), the generation of index information is terminated.

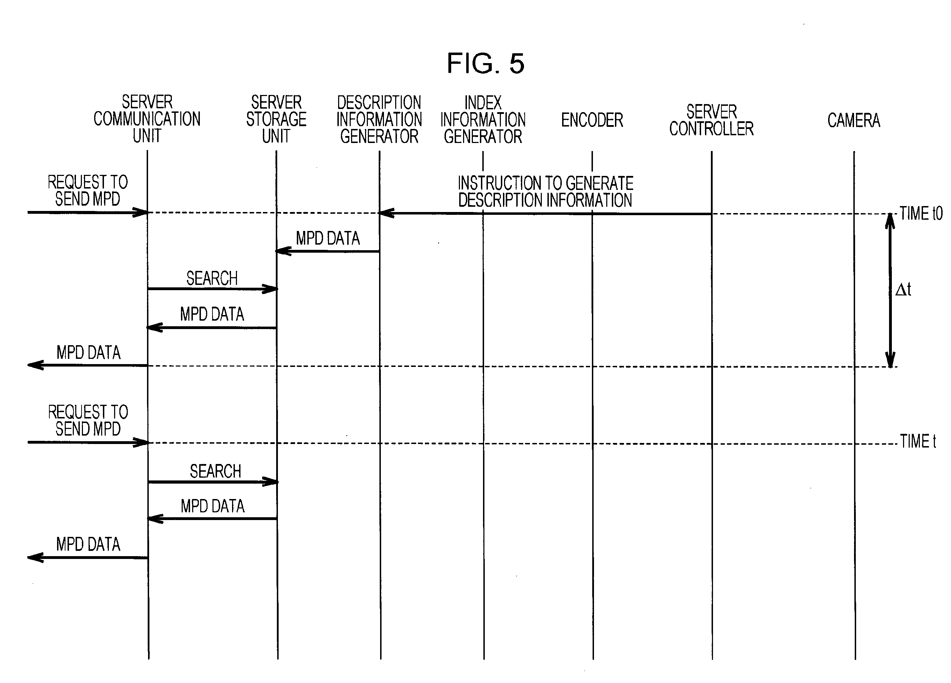

A description will now be given, with reference to Figs. 5 through 9, of operations performed by the server in accordance with a timing at which each item of data is generated in the server and a timing at which the generated data can be distributed. Fig. 5 is a timing chart illustrating operations performed by the server 2 in accordance with a timing at which MPD data is generated in the server 2 and a timing at which the generated MPD data can be distributed from the server 2.

In Fig. 5, time t0 is a time at which the generation of MPD data is started. At time t0, in order to start generating MPD data, the server controller 26 instructs the description information generator 25 to generate description information by the use of predetermined distribution parameters. Upon receiving an instruction to generate description information, the description information generator 25 generates description information on the basis of specified distribution parameters (the number of representations, distribution start time, playback duration of segments, playback duration period of sub segments, minimum buffer time, and so on). In order to implement adaptive streaming in the client, the server controller 26 controls the distribution parameters so that a plurality of sub segments may be included in the minimum buffer time. For example, in the data configuration shown in Figs. 2 and 3, the minimum buffer time is set to be six seconds, and the playback duration period of sub segments is set to be two seconds. The description information generator 25 immediately generates MPD data and stores it in the server storage unit 22.

Time t0 is also a time at which the client 1 is able to obtain MPD data. Upon receiving a request to send MPD data from the client 1 by the server communication unit 21 at time T0, the server communication unit 21 searches for the requested MPD data in the server storage unit 22. As shown in Fig. 5, when the server communication unit 21 conducts a search, the generation of MPD data has already finished, and the server communication unit 21 reads the MPD data from the server storage unit 22 and sends it to the client 1. In Fig. 5, there is a time lag (Δt) from when a request to send MPD data has been sent from the client 1 until when a response is received. This time lag Δt is not long enough for a user to perceive and is a sufficiently short time.

In the server 2, since the generated MPD data is stored in the server storage unit 22, the client 1 is able to obtain MPD data at any time t after t0.

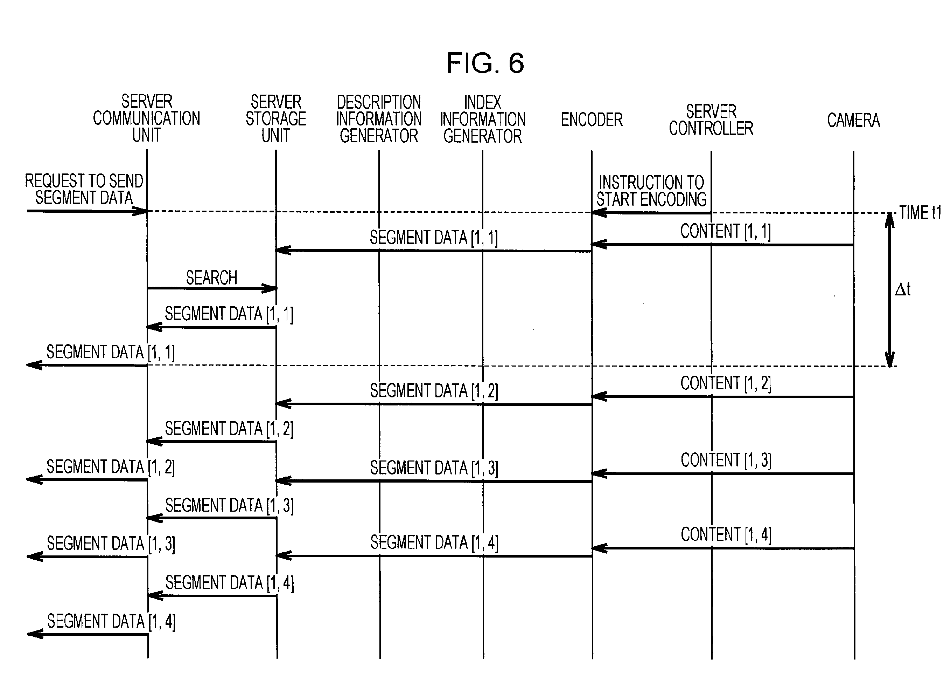

Fig. 6 is a timing chart illustrating operations performed by the server 2 in accordance with a timing at which segment data is generated in the server 2 and a timing at which segment data can be distributed from the server 2.

In Fig. 6, time t1 is a time at which live encoding in the server 2 is started. Segment data [n, m] in Fig. 6 represents an m-th item of data of a sub segment n within segment data. The segment data [n, m] indicates a result of encoding input content [n, m] by the encoder 23.

At time t1, in order to start live encoding of segment data, the server controller 26 instructs the encoder 23 to start encoding with predetermined distribution parameters. The encoder 23 starts encoding on the basis of specified distribution parameters (codec, bit rate, image size, playback duration of segments, playback duration period of sub segments, and so on). The distribution parameters are supplied to the encoder 23 for each representation.

Upon receiving content, the encoder 23 encodes items of segment data at the same time in parallel with a plurality of distribution parameters. Since there are two representations in the example shown in Fig. 2, the encoder 23 encodes two items of segment data at the same time in parallel. As shown in Fig. 6, when content [1, 1] is input into the encoder 23, it is immediately live-encoded into segment data [1, 1] and is stored in the server storage unit 22. Thereafter, every time content [1, 2], content [1, 3], content [1, 4], and so on, are sequentially input into the encoder 23, they are respectively live-encoded into segment data [1, 2], segment data [1, 3], segment data [1, 4], and so on. The encoded segment data [1, 2], segment data [1, 3], segment data [1, 4], and so on, are added to segment data stored in the server storage unit 22.

Time t1 is also a distribution start time of segment data ("12:00, May 1, 2011", which is set in the availabilityStartTime attribute in the MPD data shown in Fig. 2). As in the above-described MPD data, upon receiving a request to send segment data from the client 1 at or after time t1, the server communication unit 21 searches for the requested segment data stored in the server storage unit 22. As shown in Fig. 6, if even part of the requested segment data is stored (in Fig. 6, segment data [1, 1] is stored when a search is conducted), the server communication unit 21 starts sending the segment data to the client 1. Thereafter, every time the remaining part of segment data is added, the communication unit 21 sequentially sends items of segment data to the client 1.

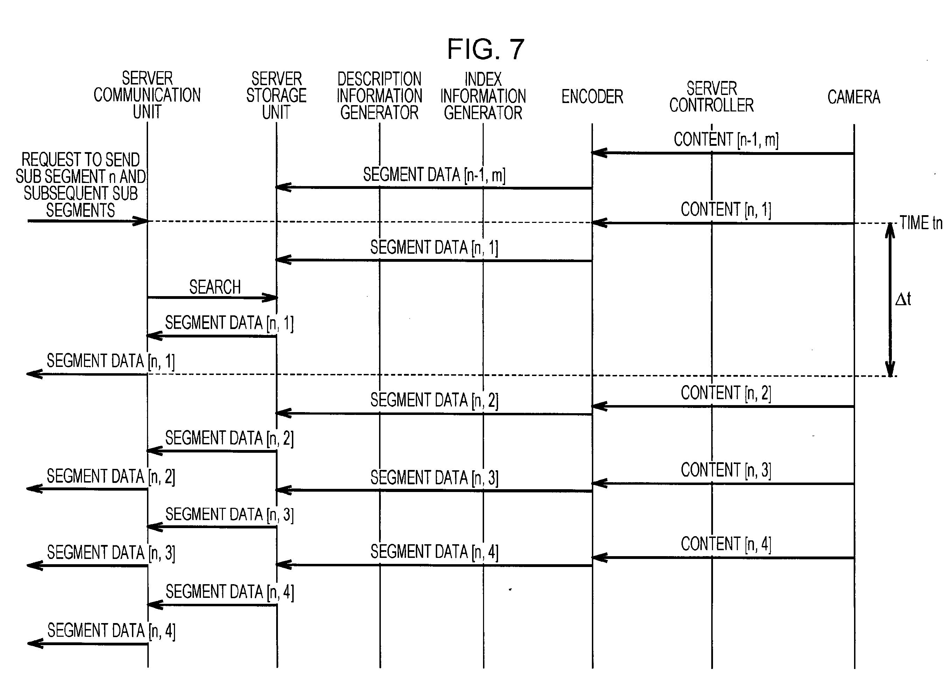

Fig. 7 is a timing chart illustrating operations performed by the server 2 in accordance with a timing at which sub segments are generated in the server 2 and a timing at which sub segments can be distributed from the server 2.

In Fig. 7, time tn is a time at which the generation of a sub segment n is started. As shown in Fig. 7, at time tn, content [n, 1], which is the head data of a sub segment n, is input from a camera, and is encoded in the encoder 23 as the head data of the sub segment n (segment data [n, 1]). The encoded segment data [n, 1] is added to segment data stored in the server storage unit 22.

Time tn is also a distribution start time of a sub segment n. As in the above-described segment data, upon receiving a request to send part of segment data which starts at the sub segment n from the client 1 at or after time tn, the server communication unit 21 searches for the requested segment data stored in the server storage unit 22. A request to obtain part of segment data is made by specifying a byte position at which segment data is started to be obtained, as indicated by the example shown in Fig. 20. Accordingly, if the requested segment data is stored, the server communication unit 21 also checks for data at the specified byte position at which segment data is started to be obtained, and if data at the specified byte position is stored, the server communication unit 21 starts sending the data to the client 1.

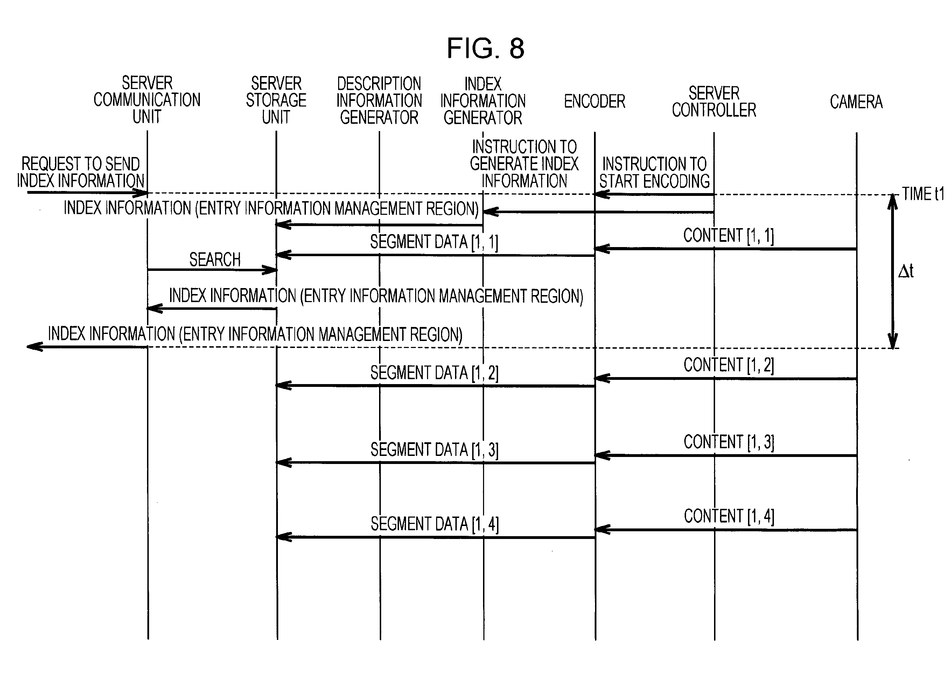

Fig. 8 is a timing chart illustrating operations performed by the server 2 in accordance with a timing at which index information is generated in the server 2 and a timing at which index information can be distributed from the server 2.

In Fig. 8, time t1 is the same time as time t1 in Fig. 6, and is a time at which the generation of index information is started. At time t1, in order to generate index information, the server controller 26 instructs the index information generator 24 to generate index information on the basis of predetermined distribution parameters. As stated above, the index information generator 24 starts generating index information on the basis of the specified distribution parameters (playback duration of segments and playback duration period of sub segments). At time t1, only an entry information management region is generated and is stored in the server storage unit 22. As in segment data, a plurality of items of index information are generated at the same time in parallel in accordance with the number of representations to be distributed.

Time t1 is also a time at which the distribution of index information is started. That is, at time t1, the client 1 is able to receive both of segment data and index information. Upon receiving a request to send index information from the client 1 at or after time t1, the server communication unit 21 searches for the requested index information stored in the server storage unit 22. As shown in Fig. 8, if even part of the requested index information is stored (in Fig. 8, only the entry information management region is stored when a search is conducted), the server communication unit 21 starts sending the index information to the client 1. Thereafter, every time an entry is added to the index information, such entries are sequentially sent to the client 1.

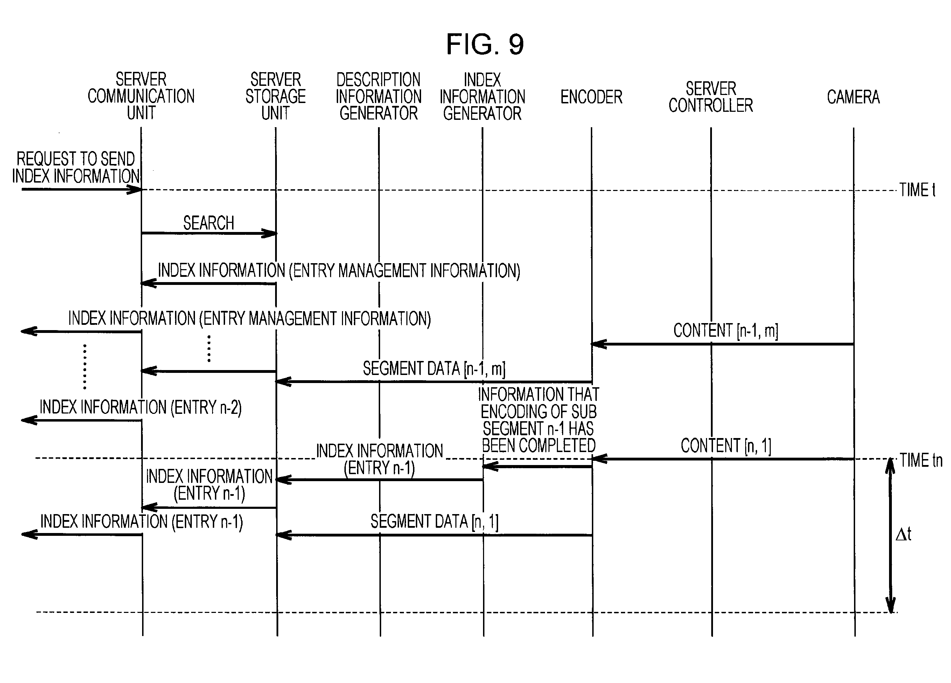

Fig. 9 is a timing chart illustrating operations performed by the server 2 in accordance with a timing at which each item of entry information of index information is generated in the server 2 and a timing at which each item of entry information can be distributed from the server 2.

In Fig. 9, time tn is the same time as time tn discussed in Fig. 7 (time at which the generation of a sub segment n is started), and a time at which an entry n-1 of index information is generated.

As shown in Fig. 9, at time tn, the encoder 23 finishes generating a sub segment n-1 and starts generating a sub segment n. Upon completing of the generation of the sub segment n-1, the encoder 23 notifies the index information generator 24 that the generation of the sub segment n-1 has been completed.

Upon receiving information that the generation of the sub segment n-1 has been completed, the index information generator 24 generates an entry n-1 of the index information and adds the entry n-1 to the index information stored in the server storage unit 22.

Time tn is also a time at which the distribution of the entry n-1 of the index information is started. As shown in Fig. 9, as in the above-described segment data for which a request to send index information has been received from the client 1 at time t (tn>t), upon receiving a request to send part of segment data which starts at the sub segment data n from the client 1 at or after time tn, the server communication unit 21 searches for the requested segment data stored in the server storage unit 22. If part of the index information is stored, the server communication unit 21 sequentially sends items of data to the client 1.

Immediately before time tn, entries up to the entry n-2 are stored in the server storage unit 22 as index information. Accordingly, entries up to the entry n-2 may be sent. As stated above, at time tn, the entry n-1 is generated and is immediately added to the server storage unit 22. The server communication unit 21 immediately sends the added entry n-1 to the client 1.

As stated above, at time tn at which the distribution of the sub segment n of the segment data is started, the server 2 is able to distribute information concerning the sub segment 1 through the sub segment n-1 of the segment data to the client 1 as the index information.

### [Details of Processing Performed by Client 1]

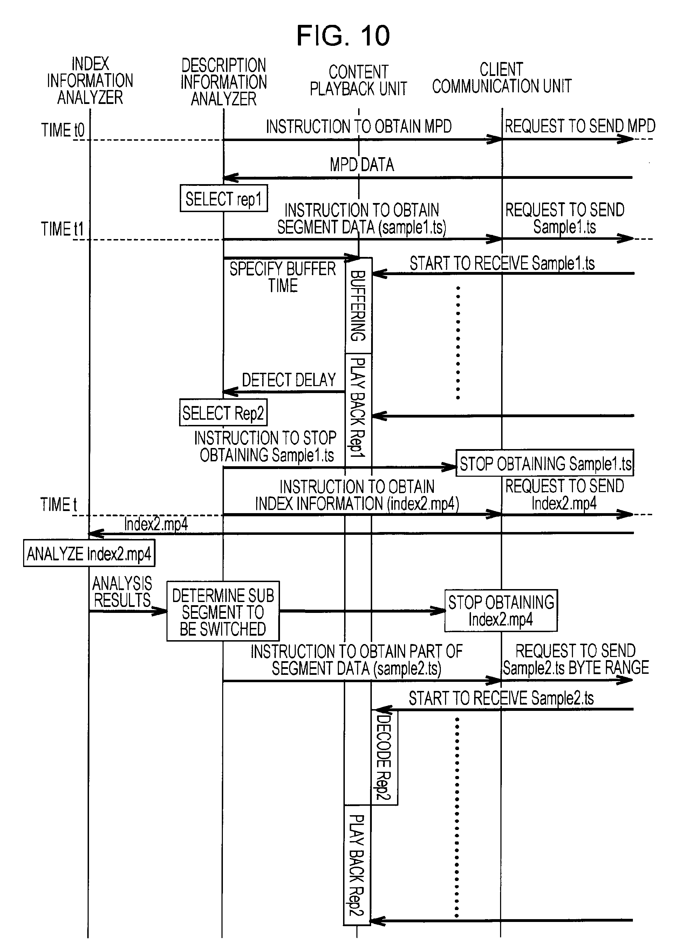

Details of adaptive streaming playback using index information will be described below with reference to Fig. 10.

Fig. 10 is a timing chart illustrating an operation performed by the client 1 when the necessity to perform the switching of representations during stream playback has arisen.

In the client 1, at time t0 at which the distribution of MPD data is started (the same time as t0 shown in Fig. 5), the description information analyzer 12 first instructs the client communication unit 11 to obtain MPD data, and the client communication unit 11 issues a request to send MPD data to the server 2.

The description information analyzer 12 receives the MPD data shown in Fig. 2 through the client communication unit 11. The description information analyzer 12 selects the representation indicated by id="rep1" as the playback subject at the start of streaming, and waits until the streaming start time (t0: 12:00, May 1, 2011).

At the streaming start time t1, the description information analyzer 12 instructs the client communication unit 11 to obtain segment data "sample1.ts" forming the representation indicated by id="rep1", and the client communication unit 11 issues a request to send segment data "sample1.ts" to the server 2.

The description information analyzer 12 also informs the content playback unit 13 of a buffer time on the basis of the minimum buffer time described in the MPD data. Since the minimum buffer time is set to be six seconds in the MPD data shown in Fig. 2, the description information analyzer 12 informs the content playback unit 13 of this value.

The segment data "sample1.ts" received from the server 2 is sequentially input into the content playback unit 13. The content playback unit 13 does not start playback until the playback duration of the received segment data reaches the specified buffer time, that is, six seconds, and instead, buffers the segment data.

At a time point at which the playback duration of the received segment data has reached six seconds, the content playback unit 13 starts playing back the segment data. In the server 2, live-encoding of the content has already started at time t1, and at least six seconds of buffer delay occurs regardless of the network condition before starting playback by the content playback unit 13. In this case, a description will be given below, assuming that playback is started after the lapse of the minimum buffer delay (six seconds).

If, during the playback of rep1 (sample1.ts), the throughput necessary for stream playback is secured due to a good network condition between the client and the server, segment data corresponding to six seconds of buffer time is constantly buffered in the content playback unit 13. On the other hand, if the receiving of segment data has delayed due to a decrease in the throughput between the client and the server, the amount of segment data buffered in the content playback unit 13 is reduced. For example, when the amount of buffered segment data is reduced to that corresponding to four seconds of playback duration, the content playback unit 13 detects that playback of the segment data has delayed and informs the description information analyzer 12 of the occurrence of a delay.

Upon receiving information indicating the occurrence of a delay, the description information analyzer 12 selects rep2 which requires a narrower bandwidth to perform stream playback than that of rep1, and instructs the client communication unit 11 to stop obtaining rep1 (smaple1.ts) and also to obtain rep2 index information "index2.mp4" in order to specify a sub segment to be switched.

The index information index2.mp4 obtained from the server 2 is analyzed in the index information analyzer 14, and the index information analyzer 14 informs the description information analyzer 12 of the data size and the playback duration period concerning each sub segment as analysis results. If the server 2 was live-encoding and live-distributing a sub segment n at time t at which a request to send index information was received, the obtained index information includes entries up to the entry n-1. That is, analysis results including entries up to the entry n-1 are supplied to the description information analyzer 12. Meanwhile, at time t, the content playback unit 13 is playing back the sub segment n-3 which has been delayed for six seconds from the time at which the sub segment n-3 was received from the server 2. Additionally, since segment data corresponding to four seconds is buffered in the content playback unit 13, it means that the sub segment n-2 and part of the sub segment n-1 are buffered.

Upon receiving the analysis results of index information concerning the sub segment n-1, the description information analyzer 12 instructs the client communication unit 11 to stop obtaining index information "index2mp4" and also to obtain part of the segment data "sample2.ts" forming rep2. The range of segment data to be obtained is sub segments starting from the sub segment n-1, and the byte offset of the sub segment n-1 is specified from the analysis results of the index information.

Upon starting to receive "sample2.ts" of sub segments starting from the sub segment n-1, they are sequentially input into the content playback unit 13. Data corresponding to the playback duration period which overlaps that of rep1 ("sample1.ts") that has already been buffered is decoded together with the counterpart of rep1. However, the decoded data is not displayed and is discarded instead. Thereafter, upon completing of the playback of rep1 ("sample1.ts") which has been buffered, the playback subject is switched to rep2 without interrupting stream playback, thereby enabling a user to enjoy viewing or listening to the content.

In the above-described configuration, in order to give higher priority to high-quality playback of representations, data rep 1 and data rep2 in the same playback duration period are both decoded. With this configuration, however, the client 1 needs multiple decoders. Thus, instead of decoding both of rep1 and rep2 of the same playback duration period, part of the sub segment data n-1 of rep1 which has been decoded is discarded, and the sub segment data n-1 of rep2 may be decoded and displayed.

In the above-described example, the playback subject is switched to content having a different bandwidth. However, the content to be switched is not restricted to pieces of content having different bandwidths discussed in this example. For example, if content is constituted by multi-angle video images, the playback subject may be seamlessly switched to content having a different angle. Additionally, in the above-described example, one piece of content is switched to another piece of content at the same playback position. However, one piece of content may be switched to another piece of content at a different playback position as long as such a position can be specified from index information. That is, time shift playback within a range which can be specified by index information may be performed.

As described above, the content distribution system of this embodiment implements adaptive streaming using index information and also increases the simplicity of MPD data.

The client makes a request to send index information and segment data only when the switching of representations is required, thereby making it possible to decrease HTTP requests and the communication traffic during streaming. If the switching of representations is not required due to a good network condition between the client and the server, no HTTP requests are necessary whatsoever after starting stream playback.

The content is provided as a single piece of segment data for each representation. Accordingly, a client without a function of analyzing MPD data or index information (without an adaptive streaming function), for example, a web browser, may be able to receive information concerning URLs of the segment data and to play back the content.

### [Selection of Distribution Method]

The distribution method may be selected between a method in which when the generation (encoding) of a sub segment and/or an entry has finished, such an item of data can be distributed (method in the above-described embodiment) and a method in which when the generation (encoding) of all sub segments included in segment data and/or all entries included in index information has finished, such items of data can be distributed. These distribution methods may be distinguishable from each other by using MPD data.

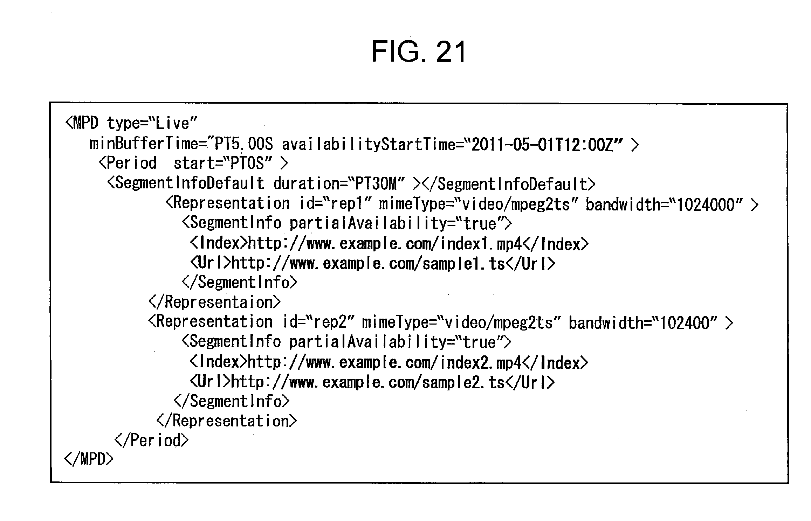

A technique for identifying a plurality of distribution methods will be discussed below with reference to Fig. 21. Fig. 21 illustrates an example of MPD data including a flag for identifying a distribution method.

The MPD data shown in Fig. 21 is different from that shown in Fig. 2 in that a partialAvailability attribute indicating the distribution method is added to the SegmentInfo element. This partialAvailability attribute may take "true" or "false" as a value. The flag partialAvailability="true" indicates that data can be distributed per sub segment and/or per entry. The flag partialAvailability="false" indicates that data can be distributed per entire segment data and/or per entire index information. If a description of the partialAvailability attribute is omitted, it is interpreted similarly to that partialAvailability="false".

In the example shown in Fig. 21, the partialAvailability attribute is described as the attribute of the SegmentInfo element. However, the partialAvailability attribute is not restricted to the attribute of the SegmentInfo element, and may be described as the attribute of an element higher than the SegmentInfo element, for example, the Representation element or the Period element. Alternatively, the partialAvailability attribute may be described as the attribute of an element lower than the SegmentInfo element, for example, the Index element or the Url element.

When generating such MPD data, the server controller 26 instructs the description information generator 25 to generate description information by specifying the value of the partialAvailability attribute, in addition to the above-described predetermined distribution parameters (the number of representations, distribution start time, playback duration of segments, playback duration period of sub segments, minimum buffer time, and so on).

Then, the description information generator 25 generates MPD data including the partialAvailability attribute, which is information indicating whether or not sub segments (content corresponding to a partial playback duration period) may be transmitted before the encoding of segment data (the entire playback duration) has been completed. This MPD data is stored in the server storage unit 22 as the description information 29.

Then, in response to a request to send MPD from the client 1, the server communication unit 21 reads the MPD data generated as described above from the server storage unit 22 and sends the MPD data to the client 1. The method for allowing the client to obtain MPD data is not restricted to the method described above.

Upon receiving such MPD data, if the switching of representations is performed, the client 1 may send an HTTP request in accordance with one of the above-described two distribution methods by referring to the MPD data. More specifically, if the value of the partialAvailability attribute included in the obtained MPD data is "true", it is possible to obtain entries corresponding to sub segments which have been generated (encoded) even before the generation (encoding) of all sub segments included in a segment and/or all entries included in index information has been completed. Accordingly, the client communication unit 11 of the client 1 sends an HTTP request which specifies a byte range (byte position), such as that shown in Fig. 20, and obtains data starting from the specified sub segment of a new representation to which the client 1 wishes to switch. Thus, distribution with very little delay is implemented. On the other hand, if the value of the partialAvailability attribute included in the obtained MPD data is "false", until the generation (encoding) of all sub segments included in a segment and/or all entries included in index information has been completed, it is not possible to obtain these items of data. Thus, the client communication unit 11 identifies that it is necessary to send an HTTP request which specifies a byte range after the completion of the generation (encoding) of these items of data.

In this manner, by describing the partialAvailability attribute in the MPD data, the client 1 is able to send a HTTP request suitable for the distribution method.

Meanwhile, if the server 2 handles an HTTP request which specifies a byte range, the description information generator 25 generates MPD data in which the value of the partialAvailability attribute is set to be "true". If the server 2 does not handle an HTTP request which specifies a byte range, the description information generator 25 generates MPD data in which the value of the partialAvailability attribute is set to be "false". In this manner, the design flexibility can be enhanced.

### [Examples of Other Configurations]

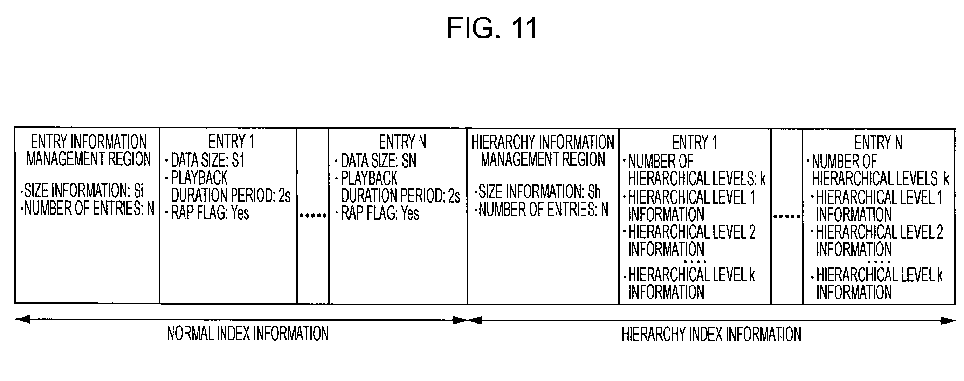

In the above-described example, the data structure of the index information 28 is that shown in Fig. 3. In DASH, however, in order to implement trick playback, such as multiple speed (x) playback, index information having a data structure shown in Fig. 11 may be used. The index information shown in Fig. 11 has a data structure in which hierarchy index information necessary for implementing trick playback is added to the second part of the data structure shown in Fig. 3. The hierarchy index information also has entry information concerning each sub segment. Each entry includes information concerning the number of hierarchical levels and also includes information for performing trick playback for each hierarchical level. Hereinafter, the portion of the index information having the same data structure as that of the index information shown in Fig. 3 excluding the hierarchy index information shown in Fig. 11 will be referred to as "normal index information", which will be distinguished from the hierarchy index information.

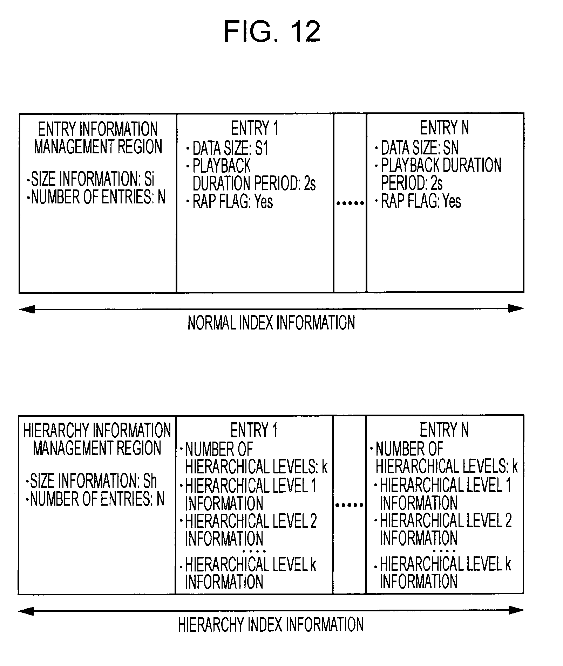

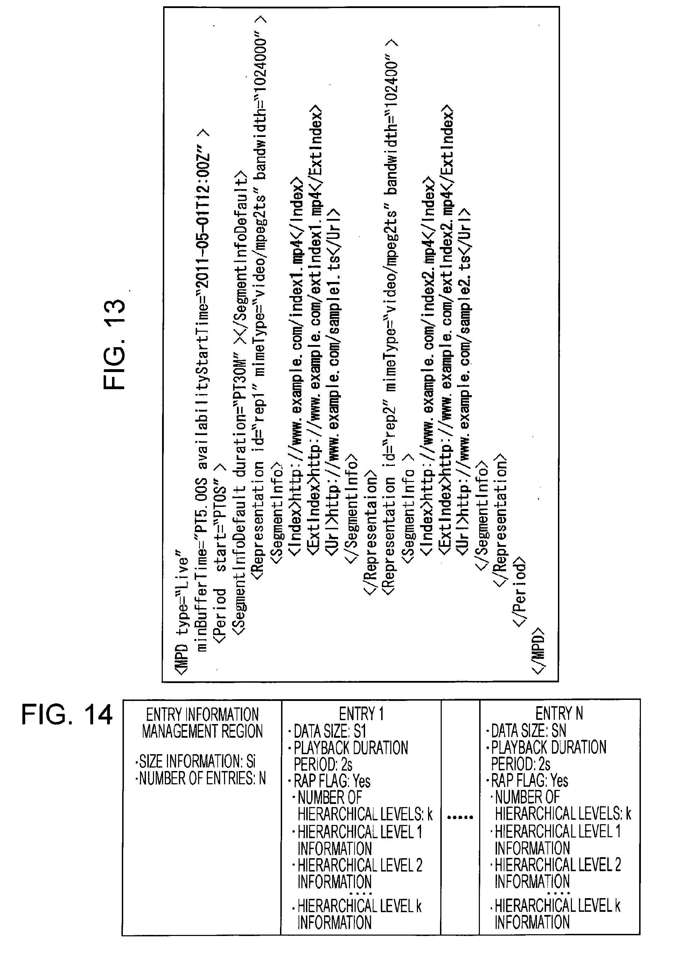

When index information having the data structure shown in Fig. 11 is used in the content transmitting-and-receiving system 3, the following problem arises. Since, as stated above, the distribution of normal index information has not finished until live streaming has finished, the client 1 is unable to obtain hierarchy index information during live streaming, thereby failing to implement trick playback. In order to solve this problem, normal index information and hierarchy index information are generated as independent items of information, as shown in Fig. 12, and an Index element and an ExtIndex element are described, as indicated by MPD data shown in Fig. 13. Then, a URL for referring to the normal index information is described in the Index element, while a URL for referring to the hierarchy index information is described in the ExtIndex element. With this configuration, the normal index information and the hierarchy index information may be independently obtained.

Alternatively, as indicated by an example of the data structure of index information shown in Fig. 14, the following configuration of index information may be used. Information included in an entry of normal index information and information included in an entry of hierarchy index information are described together in one entry for each sub segment.

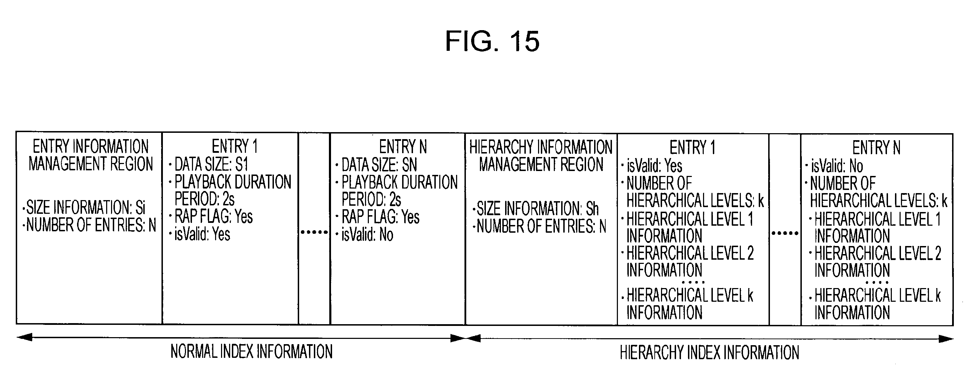

Alternatively, as indicated by an example of the data structure of index information shown in Fig. 15, in each entry of normal index information and in each entry of hierarchy index information, a field "isValid" indicating whether or not a valid value is set in the associated entry may be provided. Then, every time the encoding of a sub segment has finished, the index information generator 24 describes entry information in an entry corresponding to the encoded sub segment, and also sets "Yes" in "isValid" indicating that this entry is a valid entry. On the other hand, for an entry concerning a sub segment which has not been encoded, the index information generator 24 sets "No" in "isValid" indicating that this entry is not a valid entry. In this manner, the entire index information may be generated and may be distributed immediately. In this case, by referring to the value of "isValid", it is possible to specify which entries are valid (which entries include entry information) among a predetermined number of entries.

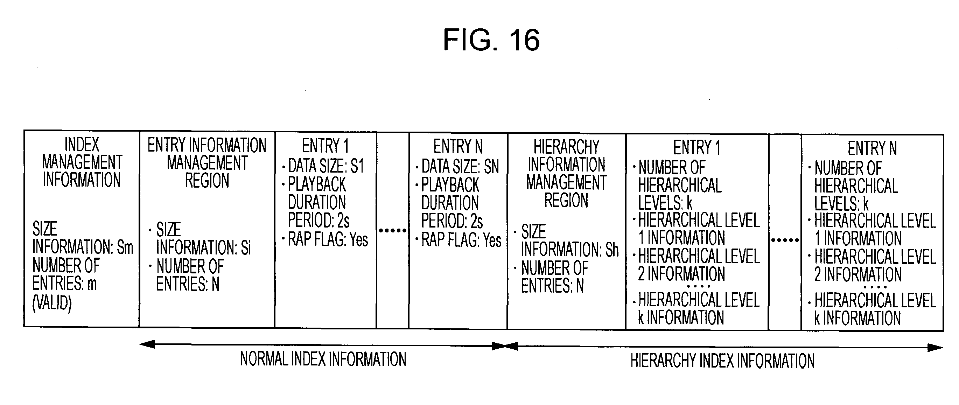

Alternatively, index information having the following data structure shown in Fig. 16 may be generated every time the encoding of a sub segment has finished. In this index information, the data structure shown in Fig. 11 is used as the data structure of normal index information and hierarchy index information, and, at the head of the entire index information, index management information indicating the number of valid entries included in this index information is described.

Moreover, as in the data structure which does not utilize hierarchy index information (example shown in Fig. 21), the distribution method may be selected between a method in which when the generation (encoding) of a sub segment and/or entries (including both of an entry of normal index information and an entry of hierarchy index information) has finished, such an item of data can be distributed and a method in which when the generation (encoding) of all sub segments included in segment data and/or all entries included in normal index information and all entries included in hierarchy index information has finished, such items of data can be distributed. These distribution methods may be distinguishable from each other by using MPD data.

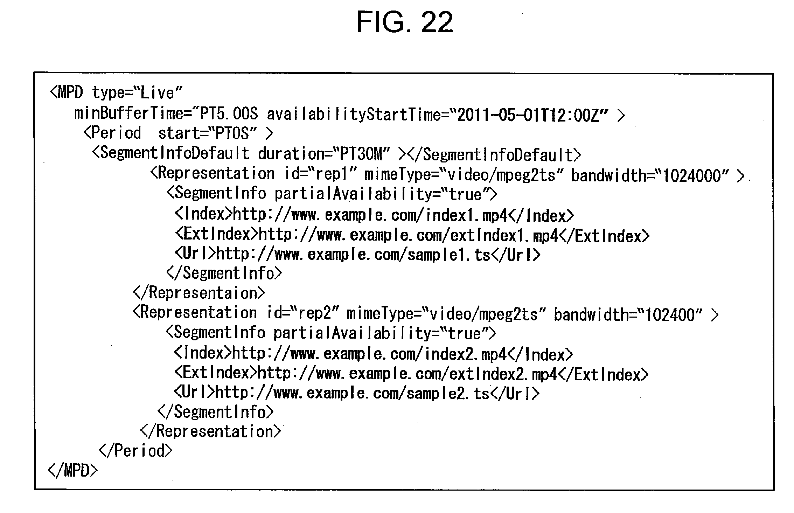

This will be discussed below with reference to Fig. 22. Fig. 22 illustrates another example of MPD data including a flag for distinguishing distribution methods.

The MPD data shown in Fig. 22 is different from that shown in Fig. 13 in that a partialAvailability attribute indicating the distribution method is added to the SegmentInfo element. This partialAvailability attribute may take "true" or "false" as a value. The flag partialAvailability="true" indicates that data can be distributed per sub segment and/or per entry. The flag partialAvailability="false" indicates that data can be distributed per entire segment data and/or per entire index information (including both of normal index information and hierarchy index information). If a description of the partialAvailability attribute is omitted, it is interpreted similarly to that partialAvailability="false".

In the example shown in Fig. 22, the partialAvailability attribute is described as the attribute of the SegmentInfo element. However, the partialAvailability attribute is not restricted to the attribute of the SegmentInfo element, and may be described as the attribute of an element higher than the SegmentInfo element, for example, the Representation element or the Period element. Alternatively, the partialAvailability attribute may be described as the attribute of an element lower than the SegmentInfo element, for example, the Index element, the ExtIndex element, or the Url element.

When generating such MPD data, the server controller 26 instructs the description information generator 25 to generate description information by specifying the value of the partialAvailability attribute, in addition to the above-described predetermined distribution parameters (the number of representations, distribution start time, playback duration of segments, playback duration period of sub segments, minimum buffer time, and so on).

Then, the description information generator 25 generates MPD data including the partialAvailability attribute which indicates whether or not sub segments (content corresponding to a partial playback duration period) may be transmitted before the encoding of segment data (the entire playback duration) has been completed. This MPD data is stored in the server storage unit 22 as the description information 29.

Then, in response to a request to send MPD from the client 1, the server communication unit 21 reads the MPD data generated as described above from the server storage unit 22 and sends the MPD data to the client 1. The method for allowing the client to obtain MPD data is not restricted to the method described above.

Upon receiving such MPD data, if the switching of representations is performed, the client 1 is able to send an HTTP request in accordance with one of the above-described two distribution methods by referring to the MPD data. More specifically, if the value of the partialAvailability attribute included in the obtained MPD data is "true", it is possible to obtain entries corresponding to sub segments which have been generated (encoded) even before the generation (encoding) of all sub segments included in a segment and/or all entries included in normal index information and hierarchy index information has been completed. Accordingly, the client communication unit 11 of the client 1 sends an HTTP request which specifies a byte range (byte position), such as that shown in Fig. 20, and obtains data starting from the specified sub segment of a new representation to which the client 1 wishes to switch. Thus, distribution with very little delay is implemented. On the other hand, if the value of the partialAvailability attribute included in the obtained MPD data is "false", until the generation (encoding) of all sub segments included in a segment and/or all entries included in normal index information and hierarchy index information has been completed, it is not possible to obtain these items of data. Thus, the client communication unit 11 identifies that it is necessary to send an HTTP request which specifies a byte range after the completion of the generation (encoding) of these items of data.

In this manner, by describing the partialAvailability attribute in the MPD data, the client 1 is able to send a HTTP request suitable for the distribution method.

Meanwhile, if the server 2 handles an HTTP request which specifies a byte range, the description information generator 25 generates MPD data in which the value of the partialAvailability attribute is set to be "true". If the server 2 does not handle an HTTP request which specifies a byte range, the description information generator 25 generates MPD data in which the value of the partialAvailability attribute is set to be "false". In this manner, the design flexibility can be enhanced.

### [Appendixes]

As described above, a transmitting apparatus of the present invention is a transmitting apparatus which encodes a plurality of pieces of content corresponding to the same playback duration and which transmits a piece of content which is selected as a playback subject among the encoded pieces of content to a playback apparatus. The transmitting apparatus includes: reference information generating means for generating, at a time point at which the plurality of pieces of content have been encoded up to a predetermined playback position, reference information for switching the content, which serves as a playback subject, at a partial playback duration period up to the predetermined playback position within the playback duration; and reference information providing means for causing the playback apparatus to obtain the reference information generated by the reference information generating means.

Moreover, as described above, a control method for a transmitting apparatus of the present invention is a control method for a transmitting apparatus which encodes a plurality of pieces of content corresponding to the same playback duration and which transmits a piece of content which is selected as a playback subject among the encoded pieces of content to a playback apparatus. The control method includes: a reference information generating step of generating, at a time point at which the plurality of pieces of content have been encoded up to a predetermined playback position, reference information for switching the content, which serves as a playback subject, at a partial playback duration period up to the predetermined playback position within the playback duration; and a reference information providing step of causing the playback apparatus to obtain the reference information generated in the reference information generating step.

With the above-described configuration, at a time point at which the plurality of pieces of content have been encoded up to a partial playback duration period, reference information for switching the content, which serves as a playback subject, at this partial playback duration period is generated, and the playback apparatus is allowed to obtain this reference information.

Accordingly, before the encoding of content has been completed, the playback apparatus is able to switch content, which serves as a playback subject, at a partial playback duration period. That is, with the above-described configuration, before the encoding of content has been completed, the playback apparatus is allowed to switch content, which serves as a playback subject, at some midpoint of the single playback duration.

The content which is being played back by the playback apparatus is a portion which has been encoded, and such a portion can be switched by using reference information. Accordingly, with the above-described configuration, the switching of content can be reliably performed at a playback position at which the playback apparatus is playing back.

At a time point at which the content has been encoded up to a predetermined playback position, the reference information generating means may preferably generate reference information indicating a data size of the content corresponding to a partial playback duration period up to the predetermined playback position, and thereafter, every time the content has been encoded up to a subsequent predetermined playback position, the reference information generating means may preferably add information indicating a data size of the content corresponding to a partial playback duration period between the subsequent predetermined playback position and the previous predetermined playback position to the reference information.

With the above-described configuration, at a time point at which the content has been encoded up to a predetermined playback position, reference information indicating a data size of the content corresponding to a partial playback duration period is generated, and thereafter, every time the content has been encoded up to a subsequent predetermined playback position, information indicating a data size of the content corresponding to a partial playback duration period is added to the reference information.

With the above-described configuration, since information indicating the data size of a partial playback duration period is added in accordance with the progress of encoding, the generated reference information reflects information indicating the data size of the encoded content portion corresponding to each partial playback duration period.

Accordingly, by using the generated reference information in the above-described configuration, it is possible to switch the content, which serves as a playback subject, at a partial playback duration period. For example, when the data sizes of the content in the first through third partial playback duration periods are Sz1 through Sz3, respectively, in order to switch the content at the second partial playback duration period, the playback apparatus makes a request to send the content starting from Sz1.

The reference information may be information including a predetermined number of entries and a description region which describes validity information indicating valid entries among the predetermined number of entries. At a time point at which the content has been encoded up to a predetermined playback position, the reference information generating means may add, to an entry corresponding to a partial playback duration period up to the predetermined playback position, information for switching the content, which serves as a playback subject, at the partial playback duration period. The reference information generating means may also describe validity information indicating that the entry is valid in the description region.

With the above-described configuration, at a time point at which the content has been encoded up to a predetermined playback position, to an entry corresponding to a partial playback duration period up to the predetermined playback position, information for switching the content, which serves as a playback subject, at this partial playback duration period is added, and validity information indicating that the entry is valid is described in the description region.

Upon obtaining such reference information, the playback apparatus specifies valid entries from among entries included in the reference information from the validity information, so that it can switch the content at a partial playback duration period corresponding to a valid entry by using information concerning this valid entry. That is, with the above-described configuration, by using the reference information including valid entries and invalid entries, it is possible to allow the playback apparatus to switch the content, which serves as a playback subject, at some midpoint of the single playback duration.

The transmitting apparatus may preferably further include: description information generating means for generating description information including information indicating whether or not it is possible to transmit the content corresponding to the partial playback duration period before encoding of the content corresponding to the entire playback duration has been completed; and description information providing means for causing the playback apparatus to obtain the description information generated by the description information generating means.

With the above-described configuration, description information including information indicating whether or not it is possible to transmit the content corresponding to a partial playback duration period before encoding of the content corresponding to the entire playback duration has been completed, and the playback apparatus is allowed to obtain the generated description information.

Thus, it is possible for a client to appropriately identify whether the distribution method is a method in which content, which serves as a playback subject, can be switched at a partial playback duration period or a method in which content can be distributed upon completion of the encoding of the content corresponding to the entire playback duration.

The transmitting apparatus and the playback apparatus may be implemented by a computer, in which case, a computer is operated as the individual means of the transmitting apparatus and the playback apparatus. Thus, a control program for implementing the transmitting apparatus and the playback apparatus by using a computer and a computer-readable recording medium on which the control program is recorded are also encompassed within the present invention.

### [Example of Configuration Using Software]

The individual blocks of the client 1 and the server 2 may be implemented in the form of hardware by using a logical circuit formed on an integrated circuit (IC chip), or may be implemented in the form of software by using a CPU (Central Processing Unit).

If the individual blocks of the client 1 and the server 2 are implemented in the form of software, the client 1 and the server 2 each include a CPU which executes commands of a control program which implements the individual functions, a ROM (Read Only Memory) storing this program therein, a RAM (Random Access Memory) loading this program, a storage device (recording medium), such as a memory, storing this program and various items of data therein, and so on. The object of the present invention may also be implemented by supplying a recording medium on which program code (an execution form program, an intermediate code program, and a source program) of the control program for the client 1 and the server 2, which is software implementing the above-described functions, is recorded in a computer readable manner, to the client 1 and the server 2, and by reading and executing the program code recorded on the recording medium by a computer (or a CPU or an MPU) of each of the client 1 and the server 2.

As the above-described recording medium, for example, a tape type, such as magnetic tape or cassette tape, a disk type including a magnetic disk, such as a floppy (registered trademark) disk or a hard disk, and an optical disc, such as a CD-ROM, an MO, an MD, a DVD, or a CD-R, a card type, such as an IC card (including a memory card) or an optical card, a semiconductor memory type, such as a mask ROM, an EPROM, an EEPROM (registered trademark), or a flash ROM, or a logical circuit type, such as a PLD (Programmable logic device) or an FPGA (Field Programmable Gate Array), may be used.

Since the client 1 and the server 2 are connectable to a communication network, the above-described program code may be supplied to the client 1 and the server 2 via the communication network. This communication network is not particularly restricted as long as it is capable of transmitting the program code. For example, the Internet, an intranet, an extranet, a LAN, an ISDN, a VAN, a CATV communication network, a VPN (Virtual Private Network), a public switched telephone network, a mobile communication network, a satellite communication work, etc. may be used. Additionally, a transmission medium forming this communication network is not restricted to a specific configuration or a specific type as long as it is capable of transmitting the program code. For example, a wired transmission medium, such as IEEE1394, USB, power line communication, a cable TV line, a telephone line, or an ADSL (Asymmetric Digital Subscriber Line) circuit, or a wireless transmission medium, such as infrared, for example, IrDA or a remote controller, Bluetooth (registered trademark), IEEE802. 11 radio, HDR (HighData Rate), NFC (Near Field Communication), DLNA (Digital Living Network Alliance), a mobile phone network, a satellite circuit, or a terrestrial digital network, may be used. The present invention may also be implemented if the above-described program code is provided in the form of a computer data signal embedded in a carrier wave through digital transmission.

### Industrial Applicability

The present invention is applicable to a content transmitting-and-receiving system that transmits and receives content via a network.

### Reference Signs List

- 1: client (playback apparatus)
- 2: server (transmitting apparatus)
- 11: client communication unit
- 12: description information analyzer
- 13: content playback unit
- 14: index information analyzer
- 21: server communication unit (reference information providing means, description information providing means)
- 22: server storage unit
- 23: encoder
- 24: index information generator (reference information generating means)
- 25: description information generator (description information generating means)
- 26: server controller
- 27: segment data
- 28: index information (reference information)
- 29: description information

## Claims

1. A transmitting apparatus which encodes a plurality of pieces of content corresponding to the same playback duration and which transmits a piece of content which is selected as a playback subject among the encoded pieces of content to a playback apparatus, comprising:
reference information generating means for generating, at a time point at which the plurality of pieces of content have been encoded up to a predetermined playback position, reference information for switching the content, which serves as a playback subject, at a partial playback duration period up to the predetermined playback position within the playback duration; and
reference information providing means for causing the playback apparatus to obtain the reference information generated by the reference information generating means.

2. The transmitting apparatus according to Claim 1, wherein at a time point at which the content has been encoded up to a predetermined playback position, the reference information generating means generates reference information indicating a data size of the content corresponding to a partial playback duration period up to the predetermined playback position, and thereafter, every time the content has been encoded up to a subsequent predetermined playback position, the reference information generating means adds information indicating a data size of the content corresponding to a partial playback duration period between the subsequent predetermined playback position and the previous predetermined playback position to the reference information.

3. The transmitting apparatus according to Claim 1, wherein:
the reference information is information including a predetermined number of entries and a description region which describes validity information indicating valid entries among the predetermined number of entries; and
at a time point at which the content has been encoded up to a predetermined playback position, the reference information generating means adds, to an entry corresponding to a partial playback duration period up to the predetermined playback position, information for switching the content, which serves as a playback subject, at the partial playback duration period, and also describes validity information indicating that the entry is valid in the description region.

4. The transmitting apparatus according to one of Claims 1 to 3, further comprising:
description information generating means for generating description information including information indicating whether or not it is possible to transmit the content corresponding to the partial playback duration period before encoding of the content corresponding to the entire playback duration has been completed; and
description information providing means for causing the playback apparatus to obtain the description information generated by the description information generating means.

5. A control method for a transmitting apparatus which encodes a plurality of pieces of content corresponding to the same playback duration and which transmits a piece of content which is selected as a playback subject among the encoded pieces of content to a playback apparatus, comprising:
a reference information generating step of generating, at a time point at which the plurality of pieces of content have been encoded up to a predetermined playback position, reference information for switching the content, which serves as a playback subject, at a partial playback duration period up to the predetermined playback position within the playback duration; and
a reference information providing step of causing the playback apparatus to obtain the reference information generated in the reference information generating step.

6. A control program for operating the transmitting apparatus according to one of Claims 1 to 4 and for causing a computer to function as the individual means.

7. A computer-readable recording medium on which the control program according to Claim 6 is recorded.
